# EUROPÄISCHE PATENTSCHRIFT

(11) **EP 1 008 628 B1**
(45) Veröffentlichungstag und Bekanntmachung des Hinweises auf die Patenterteilung: **22.03.2006**
(21) Anmeldenummer: 99122894.1
(22) Anmeldetag: 18.11.1999
(51) Int. Cl.: C08L 53/00, C08K 3/34

(54) **Talkumverstärkte Polypropylen-Formmasse mit hoher Schlagzähigkeit**
Highly impact resistant polypropylene composition comprising talc
Composition de polypropylène comprenant du talc, résistante aux chocs élevés

(30) Priorität: 11.12.1998 DE 19857292
(43) Veröffentlichungstag der Anmeldung: 14.06.2000
(73) Patentinhaber: Basell Poliolefine Italia S.r.l., 20124 Milano (IT)
(72) Erfinder: Rohrmann, Jürgen, Dr., 65779 Kelkheim (DE)
(74) Vertreter: Hoffmann, Peter

(56) Entgegenhaltungen:
- EP-A- 0 509 662
- EP-A- 0 844 281
- US-A- 4 705 818

## Beschreibung

Die vorliegende Erfindung betrifft ein Verfahren zur Herstellung einer talkumverstärkten Polypropylen-Formmasse mit hoher Schlagzähigkeit, enthaltend
a) 35 bis 90 Gew.-% eines Polymerisats des Propylens (A) mit einem Schmelzflußindex von 15 bis 100 g/10min., bei 230°C und unter einem Gewicht von 2,16 kg, nach ISO 1133 und einem Gehalt an weiteren C₂-C₁₀-Alk-1-enen von 0 bis 25 Gew.-%,
b) 5 bis 40 Gew.-% eines Polymerisats des Ethylens (B) mit 20 bis 30 Gew.-% einpolymerisierter C₄-C₁₀-Alk-1-ene, einem Schmelzflußindex von 0,2 bis 30 g/10min., bei 190°C und unter einem Gewicht von 2,16 kg, nach ISO 1133, einer Dichte von 0,850 bis 0,880 g/cm³ und einer Mooney-Viskosität (ML 1+4; 121°C) nach DIN 53523/T1 von 5 bis 50 und
c) 5 bis 25 Gew.-% Talkum einer durchschnittlichen Partikelgröße von 1,0 bis 10 µm, nach der Sedigraph-Methode.
wobei das Polymerisat des Propylens (A), das Polymerisat des Ethylens (B) und das Talkum (C) miteinander in einer Mischapparatur vermengt werden, dadurch gekennzeichnet, daß die Vermengung der drei Komponenten (A), (B) und (C) in einem Zweischneckenextruder bei Temperaturen von 180 bis 280°C in Anwesenheit eines organischen Peroxiden erfolgt.

Weiterhin betrifft die vorliegende Erfindung die Verwendung derartiger talkumverstärkter Polypropylen-Formmassen, in Folien, Fasern oder Formkörper, insbesondere im Automobilbereich.

Blends, d.h. Mischungen aus hochschlagzähem Polypropylen mit anderen Polyolefinen sind seit nunmehr 20 Jahren die wichtigste Werkstoffklasse bei der Herstellung von Automobilstoßfängern und Armaturentafeln. Während zu Beginn dieser Entwicklung vorwiegend Blends aus Polypropylen und Ethylen-Propylen-Kautschuken zum Einsatz kamen, die im Extruder hergestellt wurden, wurden etwa 10 Jahre später insbesondere auch solche Blends verwendet, die in einer Reaktorkaskade erhalten worden sind. Dabei wird zunächst in einem ersten Reaktor ein Polypropylen hergestellt, welches dann in den zweiten Reaktor übergeführt wird, wo diesem Ethylen und Propylen hinzupolymerisiert wird. Die Polymerisation erfolgt üblicherweise mit Hilfe von Ziegler-Natta-Katalysatoren, wie zum Beispiel in der EP-A 45975, der US-A 4857613 oder der US-A 5288824 beschrieben.

Seit einigen Jahren werden zunehmend auch mineralverstärkte Blends aus Polypropylen mit Ethylen-Propylen-Kautschuken eingesetzt, wobei talkumverstärkte Blends besondere Beachtung gefunden haben (EP-A 9276, EP-A 430490, EP-A 476926, DE-A 3319619). Derartige talkumverstärkte Blends weisen u. a. eine geringe Längenausdehnung auf, wodurch sie zur fugenlosen Anbindung beispielsweise eines Stoßfängers an die Karosserie (Nullspalt-Konzept) gut geeignet sind. Weiterhin zeichnen sie sich u. a. durch eine hohe Steifigkeit aus.

Die EP-A 519725 beschreibt ein hochkristallines Polyolefin-Material, das zur Herstellung von Autostoßfängern geeignet ist. Dieses Material wird durch Blenden in einem Extruder hergestellt und besteht aus folgenden vier Komponenten: einem Ethylen/Propylen-Kautschuk, einem Ethylen/Propylen-Blockcopolymer, einem Ethylen/Buten-Copolymer und 3 bis 10 Gew.-% Talkum. Die Herstellung dieser aufwendigen Mischung in einem Extruder ist sehr arbeitsintensiv und führt zu Inhomogenitäten. Die mechanischen Daten dieser Mischung entsprechen nicht den heutigen technischen Anforderungen und die Dichte des Materials ist durch die Talkumverstärkung für zahlreiche Anwendungszwecke zu hoch.

Aus der EP-A 496625 ist ebenfalls ein hochkristallines Polyolefin-Material bekannt, das zur Herstellung von Autostoßfängern geeignet ist. Dabei werden zur Erzielung noch höherer Steifigkeiten bis zu 30 Gew.-% Talkum zugesetzt. Auch diese Materialien sind durch eine für viele Anwendungszwecke zu hohe Dichte von mehr als 1,05 kg/cm³ gekennzeichnet.

**EP-A-844281** beschreibt eine Zusammensetzung aus 100 Teilen (57.8%) Ethylen-Propylen Blockpolymer mit einem Gehalt von 7% Copolymer Rubber mit einem Ethylengehalt von 45% (=3.15% Ethylen gesamt) und einem Schmelzfluß von 70 g/10 min, B) 45 Teilen (26%) eines Ethylen-Kopolymers mit 25.5% Octen, einem Schmelzfluß von 1 g/10 min und einer Dichte von 0.871 g/cm³ und C) 28 Teile (16.1 %) Talkum mit einem Partikel-Durchmesser von 5.7 µm wobei der Schmelzflußindex von A) durch Peroxide angepaßt ist.

**EP-A-509662** beschreibt Zusammensetzungen von Propylen Block Polymeren (45-79%, 5-20% ethylene), Ethylen Copolymer Gummi (21-35%, 10-25% Buten) und Talkum (5-20%)

**US-A-4705818** beschreibt die Peroxid Behandlung einer Mischung von 80 Teilen Polypropylen, 20 Teilen Ethylen-Propen-Gummi mit 25% Ethylene und Talkum bei 170-280°C

Zur Einsparung von Gewicht sind Formteile, wie zum Beispiel Stoßfänger, mit dünnerer Wandstärke von Vorteil. Um einen großflächigen Stoßfänger mit dünner Wandstärke mittels Spritzguß herzustellen, benötigt man jedoch ein sehr leichtfließendes Material, das auch noch die üblichen Forderungen bzgl. hoher Steifigkeit, ausreichender Tieftemperaturschlagzähigkeit und geringer Längenausdehnung besitzt. Darüber hinaus muß das Material auch kostengünstig sein. Dies ist mit den bis jetzt bekannten Polypropylen-Blends nicht realisierbar, da die Fließfähigkeit (Schmelzflußindex) bekannter Stoßfängermaterialien nur im Bereich von 2,5 bis 9 g/10min. bei 230°C und 2,16 kg, nach ISO 1133, liegt.

Eine Anhebung des Schmelzflußindex von Polypropylen-Blends, was zur Herstellung von Formteilen mit dünner Wandstärke nötig wäre, ist jedoch mit einem Verlust an Schlagzähigkeit bei tiefen Temperaturen verbunden. Weiterhin beobachtet man bei Blends aus leichtfließendem Polypropylen mit Ethylen-Propylen-Kautschuk aufgrund der sehr unterschiedlichen Viskosität neben einer schlechten Schlagzähigkeit bei tiefen Temperaturen auch sehr schlechte Dispergierungen. Ein chemischer Abbau derartiger Polypropylen-Blends mit organischen Peroxiden zur Anhebung der Fließfähigkeit hat zur Folge, daß die Schlagzähigkeit und die Steifigkeit dra-stisch verschlechtert werden. Weiterhin wird durch Verstärkung derartiger Blends mit Talkum neben der Fließfähigkeit auch die Reißdehnung herabgesetzt.

Aufgabe der vorliegenden Erfindung war es daher, den geschilderten Nachteilen abzuhelfen und eine Verfahren zur Herstellung von Polypropylen-Formmassen zu entwickeln, die aufgrund ihres Schmelzflußindexes von wenigstens 10 g/10min., bei 230°C und 2,16 kg, nach ISO 1133, zur Herstellung von Formteilen dünnerer Wandstärken geeignet ist und neben einer guten Steifigkeit und Schlagzähigkeit bei tiefen Temperaturen auch eine geringe Längenausdehnung und eine hohe Reißdehnung aufweisen.

Das erfindungsgemäße Verfahren zur Herstellung talkumverstärkter Polypropylen-Formmasse besteht aus
a) 35 bis 90 Gew.-% eines Polymerisats des Propylens (A) mit einem Schmelzflußindex von 15 bis 100 g/10min., bei 230°C und unter einem Gewicht von 2,16 kg, nach ISO 1133 und einem Gehalt an weiteren C₂-C₁₀-Alk-1-enen von 0 bis 25 Gew.-%,
b) 5 bis 40 Gew.-% eines Polymerisats des Ethylens (B) mit 20 bis 30 Gew.-% einpolymerisierter C₄-C₁₀-Alk-1-ene, einem Schmelzflußindex von 0,2 bis 30 g/10min., bei 190°C und unter einem Gewicht von 2,16 kg, nach ISO 1133, einer Dichte von 0,850 bis 0,880 g/cm³ und einer Mooney-Viskosität (ML 1+4; 121°C) nach DIN 53523/T1 von 5 bis 50 und
c) 5 bis 25 Gew.-% Talkum einer durchschnittlichen Partikelgröße von 1,0 bis 10 µm, nach der Sedigraph-Methode.
, wobei das Polymerisat des Propylens (A), das Polymerisat des Ethylens (B) und das Talkum (C) miteinander in einer Mischapparatur vermengt werden, dadurch gekennzeichnet, daß die Vermengung der drei Komponenten (A), (B) und (C) in einem Zweischneckenextruder bei Temperaturen von 180 bis 280°C in Anwesenweit eines organischen Peroxiden erfolgt.

Die Summe der einzelnen Komponenten (A), (B) und (C) ergibt dabei stets 100 Gew.-%.

Besonders bevorzugte talkumverstärkte Polypropylen-Formmassen enthalten
a) 40 bis 70 Gew.-%, insbesondere 45 bis 65 Gew.-%, eines Polymerisats des Propylens (A),
b) 15 bis 35 Gew.-%, insbesondere 15 bis 33 Gew.-%, eines Polymerisats des Ethylens (B) und
c) 10 bis 25 Gew.-%, insbesondere 10 bis 22 Gew.-% Talkum (C),
wobei die Summe der einzelnen Komponenten (A), (B) und (C) stets wieder 100 Gew.-% ergibt.

Die erfindungemäße talkumverstärkte Polypropylen-Formmasse weist vorzugsweise einen Schmelzflußindex, bei 230°C und unter einem Gewicht von 2,16 kg, nach ISO 1133, von 10 bis 40 g/10min., insbesondere von 15 bis 25 g/10min. und besonders bevorzugt von 15 bis 20 g/10min. auf. Der Schmelzflußindex kann auch durch chemischen Abbau während des Herstellungsverfahrens der erfindungsgemäßen Polypropylen-Formmasse mit Hilfe von Peroxiden eingestellt werden.

Die dem vorliegender Verfahren zugrundeliegende erfindungsgemäße talkumverstärkte Polypropylen-Formmasse enthält u. a. das Polymerisat des Propylens (A), welches einen Schmelzflußindex von 15 bis 100 g/10min., inbesondere von 30 bis 60 g/10min. bei 230°C und unter einem Gewicht von 2,16 kg, nach ISO 1133 und einen Gehalt an weiteren C₂-C₁₀-Alk-1-enen von 0 bis 25 Gew.-%, insbesondere von 5 bis 10 Gew.-%, aufweist.

Unter der Bezeichnung C₂-C₁₀-Alk-1-en sollen neben Ethylen insbesondere auch C₄-C₁₀-Alk-1-ene wie But-1-en, Pent-1-en, Hex-1-en, Hept-1-en oder Oct-1-en verstanden werden, wobei Ethylen und But-1-en bevorzugt verwendet werden. Fernen können auch Gemische aus zwei verschiedenen C₂-C₁₀-Alk-1-enen zum Beispiel aus Ethylen und But-1-en eingesetzt werden. Das Polymerisat des Propylens (A) enthält insbesondere Ethylen als C₂-C₁₀-Alk-1-en.

Das Polymerisat des Propylens (A) kann also sowohl ein Propylenhomopolymeriat, als auch ein Propylencopolymerisat mit bis zu 25 Gew.-% einpolymerisierten weiteren C₂-C₁₀-Alk-1-enen sein. Ferner kann auch ein sogenanntes Propylen-Blockcopolymerisat aus 1,0 bis 99 Gew.-%, insbesondere aus 30 bis 90 Gew.-% eines Propylenhomopolymerisats und aus 1,0 bis 99 Gew.-%, insbesondere aus 10 bis 70 Gew.-% eines Propylencopolymerisats mit 5 bis 70 Gew.-%, insbesondere mit 7 bis 50 Gew.-% einpolymerisierter weiterer C₂-C₁₀-Alk-1-ene als Polymerisat des Propylens (A) eingesetzt werden.

Derartige Polymerisate des Propylens (A) sind sowohl im Handel käuflich als auch nach bekannten Verfahren herstellbar.

Das zu diesen Polymerisaten des Propylens (A) führende Verfahren kann in den üblichen, für die Polymerisation von Alk-1-enen verwendeten Reaktoren entweder absatzweise oder bevorzugt kontinuierlich u.a. in Lösung, als Suspensionspolymerisation oder als Gasphasenpolymerisation durchgeführt werden. Geeignete Rührreaktoren sind beispielsweise kontinuierlich betriebene Rührreaktoren, Schleifenreaktoren oder Wirbelbettreaktoren. Selbstverständlich kann die Reaktion auch in einer Reihe von mehreren, hintereinander geschaltenen Reaktoren durchgeführt werden. Bevorzugt erfolgt die Polymerisation in der Gasphase oder in einer Suspension (Massepolymerisation). Geeignete Gasphasenreaktoren sind hierbei Wirbelbettreaktoren sowie horizontal oder vertikal gerührte Pulverbettreaktoren. Insbesondere werden Pulverbettreaktoren eingesetzt, bei denen das Reaktionsbett durch vertikale Rührer in Bewegung gehalten werden. Das Reaktionsbett besteht im allgemeinen aus dem Polymerisat, das im jeweiligen Reaktor produziert wird. Geeignete Suspensionsreaktoren sind u.a. Schleifenreaktoren.

Bevorzugt erfolgt die Polymerisation der erfindungsgemäß einzusetzenden Polymerisate des Propylens (A) bei Temperaturen im Bereich von 30 bis 150°C, insbesondere von 40 bis 100°C, und Drükken im Bereich von 10 bis 100 bar, insbesondere von 15 bis 80 bar, in Gegenwart eines Ziegler-Natta-Katalysatorsystems enthaltend,
a) eine titanhaltige Feststoffkomponente, die mindestens eine halogenhaltige Magnesiumverbindung und einen Elektronendonor aufweist,
b) eine Aluminiumverbindung und
c) eine weitere Elektronendonorverbindung.

Eine bevorzugte titanhaltige Feststoffkomponente wird u. a. aus Titantetrachlorid, Diisobutylphthalat, Ethanol und Magnesiumdichlorid hergestellt. Ihre Zusammensetzung und Herstellung ist u.a. aus der EP-A 45975, der EP-A 45977 oder der EP-A 86473 bekannt.

Die titanhaltige Feststoffkomponente kann ferner neben den oben beschriebenen Komponenten auch einen Träger enthalten, beispielsweise ein anorganisches Oxid wie Kieselgel. Die daraus resultierenden Ziegler-Natta-Katalysatorsysteme sind u. a. aus der US-A 4857613 oder aus der US-A 5288824 bekannt.

Weiterhin können die erfindungsgemäß einzusetzenden Polymerisate des Propylens (A) auch durch Polymerisation bei Temperaturen von -50 bis 300°C, insbesondere von 0 bis 150°C und Drücken von 0,5 bis 3000 bar, insbesondere von 1 bis 100 bar mit Hilfe von Metallocen-Katalysatorsystemen hergestellt werden. Diese können
A) gegebenenfalls einen anorganischen oder organischen Träger,
B) mindestens einen Metallocenkomplex,
C) mindestens eine metalloceniumionenbildende Verbindung und
D) gegebenenfalls mindestens eine organische Metallverbindung eines Alkali- oder Erdalkalimetalls oder eines Metalls der III. Hauptgruppe des Periodensystems enthalten.

Derartige Metallocen-Katalysatorsysteme sind u.a. in der EP-A 692499, der EP-A 323716 oder der EP-A 790076 beschrieben.

Das Polymerisat des Propylens (A) kann nach seiner Herstellung auch noch einem kontrollierten chemischen Molmassenabbau mit organischen Peroxiden bei Temperaturen von 180 bis 280°C, insbesondere von 180 bis 240°C in einem geeigneten Mischer beispielsweise in einem Extruder unterworfen werden.

Weiterhin enthält die dem erfindungsgemäße Verfahren zugrundeliegende talkumverstärkte Polypropylen-Formmasse u. a. ein Polymerisat des Ethylens (B) mit 20 bis 30 Gew.-% einpolymerisierter C₄-C₁₀-Alk-1-ene, einem Schmelzflußindex von 0,2 bis 30 g/10min., bei 190°C und unter einem Gewicht von 2,16 kg, nach ISO 1133, einer Dichte von 0,850 bis 0,880 g/cm³ und einer Mooney-Viskosität (ML 1+4; 121°C) nach DIN 53523/T1 von 5 bis 50.

Ein bevorzugt eingesetztes Polymerisat des Ethylens (B) weist 23 bis 26 Gew. -% einpolymerisierte C₄-C₁₀-Alk-1-ene, einen Schmelzflußindex von 0,5 bis 5 g/10min., bei 190°C und unter einem Gewicht von 2,16 kg, nach ISO 1133, eine Dichte von 0,855 bis 0,870 g/cm³ und eine Mooney-Viskosität (ML 1+4; 121°C) nach DIN 53523/T1 von 20 bis 40, insbesondere von 15 bis 35 auf.

Unter der Bezeichnung C₄-C₁₀-Alk-1-ene sollen neben But-1-en insbesondere auch Pent-1-en, Hex-1-en, Hept-1-en oder Oct-1-en verwendet werden, wobei Oct-1-en besonders bevorzugt ist.

Derartige Polymerisate des Ethylens (B) sind u. a. erhältlich durch Polymerisation von Ethylen mit Hilfe üblicher Ziegler-Katalysatoren oder Phillips-Katalysatoren, wobei u.a. in der Gasphase, in einer Lösung oder in einer Suspension polymerisiert werden kann. Die Polymerisate des Ethylens (B) sind auch mit Hilfe von Metallocen-Katalysatoren herstellbar. Die Polymerisation zur Herstellung der Polymerisate des Ethylens (B) kann sowohl absatzweise als auch kontinuierlich in Rührreaktoren, Schleifenreaktoren oder Wirbelbettreaktoren durchgeführt werden. Es wird dabei vorzugsweise bei Temperaturen von 10 bis 120°C, insbesondere von 20 bis 110°C und Drücken von 1,0 bis 100 bar, insbesondere von 10 bis 50 bar polymerisiert. Die Polymerisate des Ethylens (B) können u. a. im Kunststoffhandel bezogen werden.

Zur Herstellung der erfindungsgemäß einzusetzenden Polymerisate des Ethylens (B) werden vorzugsweise Metallocen-Katalysatoren auf der Basis von single-site-Komplexen verwendet. Diese enthalten gegebenenfalls einen anorganischen oder organischen Träger, mindestens einen Single-site-Komplex, mindestens eine metalloceniumionenbildende Verbindung, sowie gegebenenfalls weitere organische Metallverbindungen.

Die erfindungsgemäß einzusetzenden Polymerisate des Propylens (A) und des Ethylens (B) können ferner Additive wie Stabilisatoren, Gleit- und Entformungsmittel, Füllstoffe, Nukleierungsmittel, Antistatika, Weichmacher, Farbstoffe, Pigmente oder Flammschutzmittel enthalten, die vor der Anwendung in üblichen Mengen zugesetzt werden. In der Regel werden diese bei der Granulierung des pulverförmig anfallenden Polymerisationsprodukts in das Polymerisat eingearbeitet (Kunststoffe, 84(1994), S. 446-450).

Übliche Stabilisatoren sind Antioxidantien wie sterisch gehinderte Phenole, Verarbeitungsstabilisatoren wie Phosphite oder Phosphonite, Säurefänger wie Calcium- oder Zinkstearat oder Dihydrotalcit, sterisch gehinderte Amine oder auch UV-Stabilisatoren. Im allgemeinen enthalten die erfindungsgemäß einzusetzenden Polymerisate des Propylens (A) oder des Ethylens (B) einen oder mehrere der Stabilisatoren in Mengen von bis zu 2 Gew.-%.

Geeignete Gleit- und Entformungsmittel sind beispielsweise Fettsäuren, Calcium- oder Zinksalze der Fettsäuren, Fettsäureamide oder niedermolekulare Polyolefinwachse, die üblicherweise in Konzentrationen von bis zu 2 Gew-% eingesetzt werden.

Als Füllstoffe für die einzusetzenden Polymerisate des Propylens (A) oder des Ethylens (B) kommen z.B. Kreide oder Glasfasern in Betracht, wobei hier Mengen von bis zu 50 Gew.-% verwendet werden können.

Geeignete Nukleierungsmittel sind beispielsweise anorganische Zusatzstoffe wie Kieselsäure oder Kaolin, Salze von Mono- oder Polycarbonsäuren wie Natriumbenzoat oder Aluminium-tert.-butyl-benzoat, Dibenzylidensorbitol oder dessen C₁-C₈-alkylsubstituierte Derivate wie Methyl- oder Dimethyldibenzylidensorbitol oder Salze von Diestern der Phosphorsäure wie zum Beispiel Natrium-2,2'-methylenbis (4,6,-di-tert.-butylphenyl)phosphat. Der Gehalt der Polymerisate (A) oder (B) an Nukleierungsmitteln beträgt in der Regel bis zu 1 Gew.-%.

Solche Additive sind in der Regel handelsüblich und werden beispielsweise in Gächter/Müller, Plastics Additives Handbook, 4th Edition, Hansa Publishers, Munich, 1993 beschrieben.

Weiterhin enthält die erfindungsgemäße Propylen-Formmasse Talkum (C) mit einer durchschnittlichen Partikelgröße von 1,0 bis 10 µm, insbesondere von 1,0 bis 4,0 µm, ermittelt nach der Sedigraph-Methode (Sedigraph D 5100). Ein derartiges Talkum kann im Handel bezogen werden.

Die Herstellung der erfindungsgemäßen talkumverstärkten Polypropylen-Formmasse erfolgt oder Knetern
dadurch, daß man das Polymerisat des Propylens (A), das Polymerisat des Ethylens (B) und das Talkum (C) miteinander in einer Mischapparatur vermengt, wobei es kennzeichnend ist, daß die Vermengung der drei Komponenten (A), (B) und (C) in einem Extruder, insbesondere in einem Zweischneckenextruder bei Temperaturen von 180 bis 280°C, insbesondere bei 180 bis 270°C erfolgt. Besonders bevorzugt wird der Mischungsvorgang bei Temperaturen von 180 bis 240°C durchgeführt.

Das Verfahren zur Herstellung der erfindungsgemäßen talkumverstärkten Polypropylen-Formmasse erfolgt in Anwesenheit eines Peroxids, insbesondere in Anwesenheit eines organischen Peroxids. Durch Zusatz eines solchen Peroxids läßt sich während des Extrusionsvorgangs der Schmelzflußindex der erfindungsgemäßen talkumverstärkten Polypropylen-Formmasse auf einen gewünschten Wert einstellen. Ferner ist es möglich, zunächst ein Polymerisat des Propylens (A) oder ein Polymerisat des Ethylens (B) zu verwenden, welches einen niedrigeren Schmelzflußindex aufweist, als in der erfindungsgemäßen Polypropylen-Formmasse vorgesehen und diesen dann durch den gezielten Einsatz von organischen Peroxiden auf einen gewünschten Wert einzustellen.

Beispiele für hierfür geeignete organische Peroxide sind u.a. Di-tert.-butylperoxid, tert.-Butylhydroperoxid, tert.-Butylperbenzoat, Dilauroylperoxid, Peroxybenzoesäure, Methylisobutylketonperoxid, Di-2-ethylhexyl-peroxydicarbonat, Dicyclohexyl-peroxydicarbonat, Dicetyl-peroxydicarbonat, Cumylperneodecanoat, tert.-Amyl-perpivalat, tert.-Butyl-perneodecanoat, tert.-Butylpermaleinat, tert.-Butyl-perpivalat sowie tert.-Butyl-perisononoat. Besonders bevorzugt wird dabei Di-tert.-butylperoxid verwendet.

Bezogen auf die Summe der eingesetzten Komponenten (A), (B) und (C) werden die organischen Peroxide vorzugsweise in einer Menge von 0,01 bis 0,1 Gew.-%, insbesondere in einer Menge von 0,02 bis 0,08 Gew.-% eingesetzt.

Die erfindungsgemäße talkumverstärkte Formmasse zeichnet sich u. a. durch eine sehr hohe Fließfähigkeit bei einem sehr guten Steifigkeits/Zähigkeitsverhältnis, sowie durch eine gute Schlagzähigkeit bei tiefen Temperaturen und eine stark verbesserte Reißdehnung aus. Das ebenfalls erfindungsgemäße Herstellverfahren ist verfahrenstechnisch einfach durchzuführen und sehr wirtschaftlich. Gegenüber bisher bekannten Blends aus Polypropylen und Ethylen-Propylen-Kautschuken kann der Schmelzflußindex durch Zugabe von organischen Peroxiden eingestellt werden, ohne daß dadurch die Tieftemperaturschlagzähigkeit verschlechtert wird.

Die erfindungsgemäße talkumverstärkte Formmasse eignet sich zur Herstellung von Folien, Fasern und Formkörpern, insbesondere zur Herstellung von Formkörpern im Automobilbereich, beispielsweise von Stoßfängern oder von Armaturentafeln.

### Beispiele

Alle nachfolgenden Beispiele und Vergleichsbeispiele wurden auf einem Zweischneckenextruder der Firma Werner & Pfleiderer mit einem Durchmesser von 53 mm durchgeführt, wobei bei einer durchschnittlichen Drehzahl von 200 Umdrehungen pro Minute und bei einem Temperaturprofil von 180 bis 230°C die jeweiligen Polypropylen-Formmassen hergestellt wurden. Zur Stabilisierung und Verarbeitung wurde bei allen hergestellten Blends, jeweils bezogen auf 100 Gew.-%, noch jeweils 0,05 Gew.-% Irganox® 1010, 0,1 Gew.-% Irgafos® 168, 0,2 Gew.-% Acrawax® C, 0,1 Gew.-% Calciumstearat und 1 Gew.-% Ruß Elftex® 570 beigemischt. Zur besseren Einstellung des Schmelzflußindexes wurde im Beispiel 5 sowie im Vergleichsbeispiel C ferner noch Trigonox® B verwendet.

Bei Irganox® 1010 von Ciba-Geigy handelt es sich um Pentaerythrityltetrakis [3-(3,5- bis (1,1-dimethylethyl)-4-hydroxyphenol) propionat] und bei Irgafos® 168, ebenfalls von Ciba-Geigy, um Tris (2,4-bis-tert.butylphenol)phosphit. Acrawax® C ist ein N,N'-Ethylen-bis-stearylamid. Bei Elftex® 570 handelt es sich um ein Furnace-Ruß, Trigonox® B ist Di-tert.-butylperoxid.

### Vergleichsbeispiel 1

64 Gew.-% eines Propylen-Blockcopolymerisats (A) aus 88 Gew.-% eines Propylenhomopolymerisats und 12 Gew.-% eines Propylen-Ethylen-Copolymerisats (I) mit einem Ethylengehalt, bezogen auf (I), von 45 Gew.-% und einem Gesamtgehalt an Ethylen, bezogen auf das Propylen-Blockcopolymerisat (A) von 7,0 Gew.-%, sowie einem Schmelzflußindex, bei 230°C und 2,16 kg, nach ISO 1133, von 40 g/10min., wurden mit 25 Gew.-% eines Ethylen-Oct-1-en-Copolymerisats (B) und 11 Gew.-% eines Talkums (C) im Zweischneckenextruder extrudiert. Das Ethylen-Oct-1-en Copolymerisat (B) wies einen Oct-1-engehalt von 24 Gew.-%, einen Schmelzflußindex, bei 190°C und 2,16 kg, nach ISO 1133, von 1,0 g/10min., eine Dichte von 0,870 g/cm³ und eine Mooney-Viskosität (ML 1+4,; 121°C) nach DIN 53523/T1 von 23 auf. Das eingesetzte Talkum (C) hatte eine mittlere Partikelgröße von 2,2 µm (nach Sedigraph D 5100).

Die erhaltene talkumverstärkte Polypropylen-Formmasse wurde hinsichtlich ihres Schmelzflußindexes, ihres Volumen-Fließindexes, ihres Zug-E-Moduls (Steifigkeit), ihrer Reißdehnung und ihrer Kerbschlagzähigkeit untersucht, ferner wurden noch elektronische Durchstoßversuche (dart impact test) vorgenommen. Die dabei erhaltenen Ergebnisse sind in der nachfolgenden Tabelle aufgeführt.

### Vergleichsbeispiel 2

Beispiel 1 wurde analog wiederholt, wobei aber ein Ethylen-Oct-1-en-Copolymerisat (B) mit einem Gehalt an Oct-1-en von 25 Gew.-%, einem Schmelzflußindex, bei 190°C und 2,16 kg, nach ISO 1133, von 1,0 g/10min., einer Dichte von 0,859 g/10min. und einer Mooney-Viskosität (ML 1+4; 121°C) nach DIN 53523/T von 20 verwendet wird.

Die Meßergebnisse der im Beispiel 2 erhaltenden Polypropylen-Formmasse sind in der nachfolgenden Tabelle aufgeführt.

### Vergleichsbeispiel 3

Beispiel 1 wurde analog wiederholt, wobei aber ein Ethylen-Oct-1-en-Copolymerisat (B) mit einem Anteil an Oct-1-en von 25 Gew.-%, einem Schmelzflußindex, bei 190°C und 2,16 kg, nach ISO 1133, von 0,5 g/10min., einer Dichte von 0,868 g/cm³ und einer Mooney-Viskosität (ML 1+4; 121°C) nach DIN 53523/T von 35 verwendet wird.

Die Meßergebnisse der im Beispiel 3 erhaltenen Polypropylen-Formmasse sind in der nachfolgenden Tabelle aufgeführt.

### Vergleichsbeispiel 4

59 Gew.-% des im Beispiel 1 verwendeten Propylen-Blockcopolymerisats (A) wurden mit 20 Gew.-% des im Beispiel 2 eingesetzten Ethylen-Oct-1-en-Copolymerisats (B) und mit 21 Gew.-% des im Beispiel 1 verwendeten Talkums (C) unter analogen Bedingungen wie im Beispiel 1 vermischt.

Die Meßergebnisse der im Beispiel 4 erhaltenen Polypropylen-Formmasse sind in der nachfolgenden Tabelle aufgeführt.

### Beispiel 5

Beispiel 1 wurde wiederholt, wobei anstelle des verwendeten Propylen-Blockcopolymerisats (A) mit einem Schmelzflußindex, bei 230°C und 2,16 kg nach ISO 1133, von 40 g/10min., ein Propylen-Blockcopolymerisat (A) gleicher Zusammensetzung aber mit einem Schmelzflußindex von 4,0 g/10min, bei 230°C und 2,16 kg, nach ISO 1133 verwendet wurde. Durch Zugabe von 0,06 Gew.-%, bezogen auf die drei Komponenten (A), (B) und (C), Trigonox® B während der Extrusion wurde der Schmelzflußindex des Propylen-Blockcopolymerisats (A) auf ca. 40 g/10min., bei 230°C und 2,16 kg, nach ISO 1133, eingestellt. Die daraus resultierende erfindungsgemäße Polypropylen-Formmasse wies einen Schmelzflußindex von ca. 16 g/10min., bei 230°C und 2,16 kg, nach ISO 1133, auf.

Die Meßergebnisse der im erfindungsgemäßen Beispiel 1 erhaltenen Polypropylen-Formmasse sind in der nachfolgenden Tabelle dargestellt.

### Vergleichsbeispiel A

Beispiel 1 wurde analog wiederholt, wobei aber anstelle von 25 Gew.-% eines Ethylen-Oct-1-en-Copolymerisats (B) jetzt 25 Gew.-% eines Kautschuk-Batches verwendet wurde. Dieser Kautschuk-Batch enthielt 65 Gew.-% eines Ethylen-Propylen-Copolymerisats mit einem Propylen-Gehalt von 41 Gew.-%, einer Dichte von 0,865 g/cm³ und einer Mooney-Viskosität (ML 1+4; 100°C) nach DIN 53523/T von 43, 25 Gew.-% eines Propylen-Blockcopolymerisats mit einem Gesamtgehalt an Ethylen von 10 % und einem Schmelzflußindex, bei 230°C und 2,16 kg, nach ISO 1133, von 6 g/10min., und 10 Gew.-% Polyethylen (HDPE) mit einem Schmelzflußindex, nach ISO 1133, bei 190°C und 2,16 kg, von 8 g/10min.

Die Meßergebnisse der in diesem Vergleichsbeispiel A erhaltenen Polypropylen-Formmasse sind in der nachfolgenden Tabelle aufgeführt.

### Vergleichsbeispiel B

Beispiel 1 wurde analog wiederholt, wobei aber anstelle von 25 Gew.-% eines Ethylen-Oct-1-en Copolymerisats (B) jetzt 25 Gew.-% eines Ethylen-Propylen-Kautschuks mit einem Propylengehalt von 24 Gew.-%, einer Mooney-Viskosität (ML 1+4; 121°C), nach DIN 53523/T, von 30 und einem Schmelzflußindex, bei 230°C und 5,0 kg, nach ISO 1133 von 7,0 g/10min. eingesetzt wurde.

Die Meßergebnisse der in diesem Vergleichsversuch B erhaltenen Polypropylen-Formmasse sind in der nachfolgenden Tabelle aufgeführt.

### Vergleichsbeispiel C

Das Vergleichsbeispiel A wurde wiederholt, wobei aber anstelle des verwendeten Propylen-Blockcopolymerisats (A) mit einem Schmelzflußindex, bei 230°C und 2,16 kg, nach ISO 1133, von 40 g/10min., ein Propylen-Blockcopolymerisat (A) gleicher Zusammensetzung, aber mit einem Schmelzflußindex von 4,0 g/10min., bei 230°C und 2,16 kg, nach ISO 1133 verwendet wurde. Durch Zugabe von 0,06 Gew.-% bezogen auf die drei Komponenten (A), (B) und (C), Trigonox® B während der Extrusion wurde der Schmelzflußindex des Propylen-Blockcopolymerisats auf ca. 40 g/10min., bei 230°C und 2,16 kg, nach ISO 1133, eingestellt. Der Schmelzflußindex der erhaltenen Polypropylen-Formmasse betrug ca. 17 g/10min., bei 230°C und 2,16 kg, nach ISO 1133.

Die Meßergebnisse der in diesem Vergleichsversuch C erhaltenen Polypropylen-Formmasse sind in der nachfolgenden Tabelle aufgeführt.

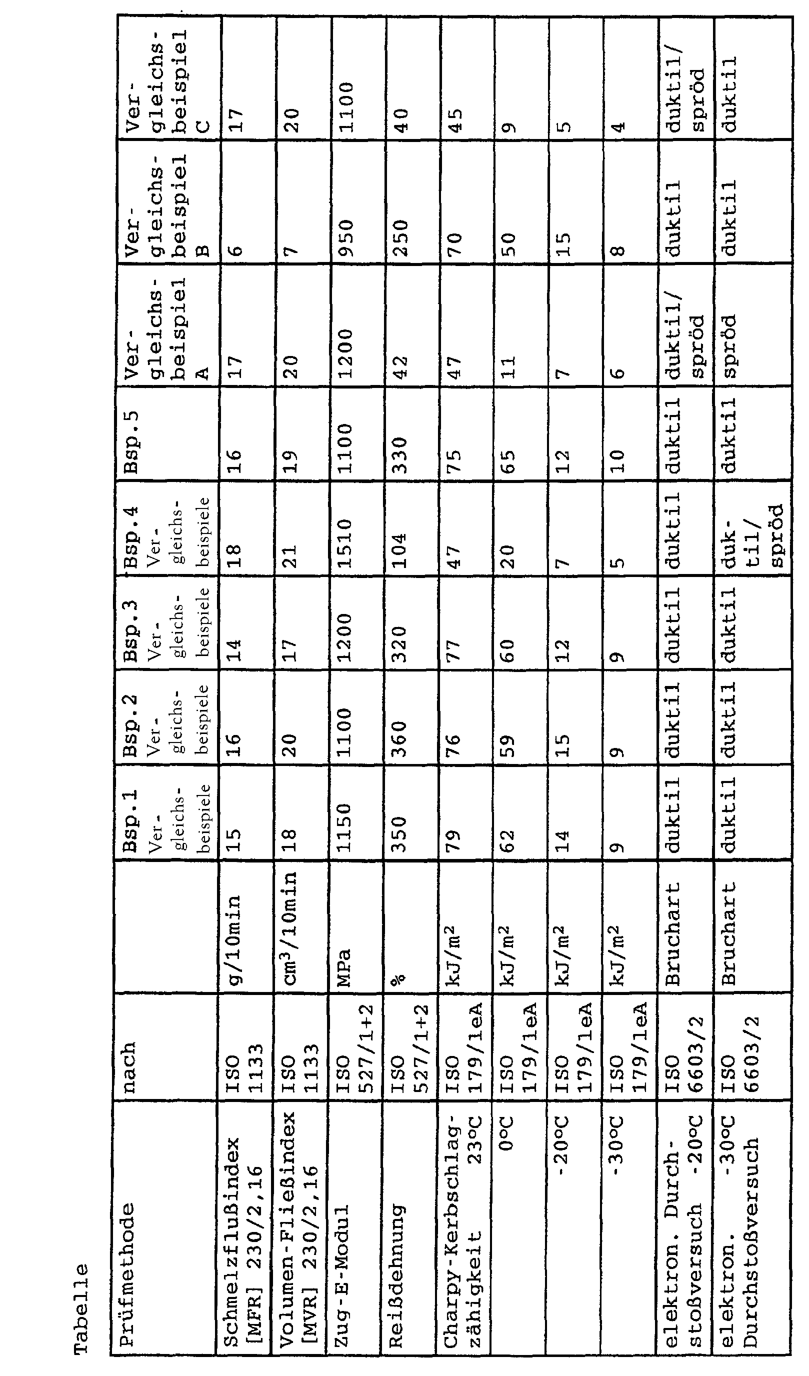

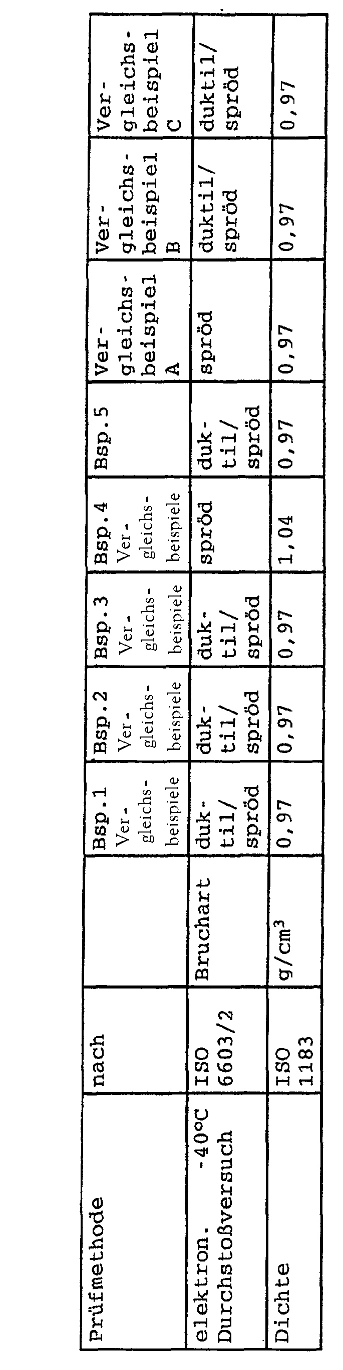

Aus der Tabelle geht u. a. hervor, daß sich die erfindungsgemäßen Polypropylen-Formmassen des Beispiels 1-4 und 5 gegenüber den Polypropylen-Formmassen der Vergleichsbeispiele A bis C bei gleicher Dichte, vergleichbarer Fließfähigkeit und Steifigkeit (Zug-E-Modul) u. a. durch eine stark verbesserte Reißdehnung, eine verbesserte Kerbschlagzähigkeit, insbesondere bei tiefen Temperaturen, und ein verbessertes Verhalten im elektronischen Durchstoßversuch (dart impact test), besonders bei tiefen Temperaturen, auszeichnen. Die erhaltenen Polypropylen-Formmassen sind aufgrund dieses Eigenschaftsprofils insbesondere bei dünnwandigen Stoßfängern ersetzbar.

## Patentansprüche

1. Verfahren zur Herstellung einer talkumverstärkten Polypropylen-Formmasse, enthaltend
a) 35 bis 90 Gew.-% eines Polymerisats des Propylens (A) mit einem Schmelzflußindex von 15 bis 100 g/10min, bei 230°C und unter einem Gewicht von 2,16 kg, nach ISO 1133 und einem Gehalt an weiteren C₂-C₁₀-Alk-1-enen von 0 bis 25 Gew.-%,
b) 5 bis 40 Gew.% eines Polymerisats des Ethylens (B) mit 20 bis 30 Gew.-% einpolymerisierter C₄-C₁₀-Alk-1-ene, einem Schmelzflußindex von 0,2 bis 30 g/10min., bei 190°C und unter einem Gewicht von 2,16 kg, nach ISO 1133, einer Dichte von 0,850 bis 0,880 g/cm³ und einer Mooney-Viskosität (MS 1+4; 121°C) nach DIN 53523/T1 von 5 bis 50 und
c) 5 bis 25 Gew.-% Talkum einer durchschnittlichen Partikelgröße von 1,0 bis 10 µm nach der Sedigraph-Methode wobei das Polymerisat des Propylens (A), das Polymerisat des Ethylens (B) und das Talkum (C) miteinander in einer Mischapparatur vermengt werden, **dadurch gekennzeichnet, daß** die Vermengung der drei Komponenten (A), (B) und (C) in einem Zweischneckenextruder bei Temperaturen von 180 bis 280°C in Anwesenheit eines organischer Peroxids erfolgt.

2. Verfahren nach Anspruch 1, wobei beim Polymerisat des Propylens (A) als weiteres C₂-C₁₀-Alk-1-en Ethylen verwendet wird.

3. Verfahren nach den Ansprüchen 1 oder 2, wobei das Polymerisat des Propylens (A) einen Schmelzflußindex von 30 bis 60 g/10min., bei 230°C und unter einem Gewicht von 2,16 kg, nach ISO 1133 und einen Gehalt an weiteren C₂-C₁₀-Alk-1-enen von 5 bis 10 Gew.-% aufweist.

4. Verfahren nach den Ansprüchen 1 bis 3, wobei beim Polymerisat des Ethylens (B) als einpolymerisiertes C₄-C₁₀-Alk-1-en Oct-1-en verwendet wird.

5. Verfahren nach den Ansprüchen 1 bis 4, wobei das Polymerisat des Ethylens (B) 23 bis 26 Gew.-% einpolymerisierte C₄-C₁₀-Alk-1-ene, einen Schmelzflußindex von 0,5 bis 5 g/10min., bei 190°C und unter einem Gewicht von 2,16 kg, nach ISO 1133, eine Dichte von 0,855 bis 0,870 g/cm³ und eine Mooney-Viskosität (ML 1+4; 121°C) nach DIN 53523/T1 von 20 bis 40 aufweist.

6. Verfahren nach den Ansprüchen 1. bis 5, wobei das Talkum (C) eine durchschnittliche Partikelgröße von 1,0 bis 4,0 µm, nach der Sedigraph-Methode aufweist.

7. Verfahren nach einem der Ansprüche 1 bis 6, wobei die Polypropylen-Formmasse
a) 40 bis 70 Gew.-% eines Polymerisats des Propylens (A),
b) 15 bis 35 Gew.-% eines Polymerisats des Ethylens (B) und
c) 10 bis 25 Gew.-% Talkum (C) aufweist.

8. Verwendung der talkumverstärkten Polypropylen-Formmasse erhalten nach einem Verfahren II gemäß einem der Ansprüche 1 bis 7 als Folien, Fasern oder Formkörper.

9. Verwendung der talkumverstärkten Polypropylen-Formmasse erhalten nach einem Verfahren III gemäß einem der Ansprüche 1 bis 7 als Formkörper im Automobilbereich.

## Claims

1. A process for preparing a talc-reinforced polypropylene molding composition, comprising
a) from 35 to 90% by weight of a propylene polymer (A) with a melt flow rate of from 15 to 100 g/10 min at 230°C and under a load of 2.16 kg in accordance with ISO 1133 and a content of from 0 to 25% by weight of other C₂-C₁₀ 1-alkenes,
b) from 5 to 40% by weight of an ethylene polymer (B) with from 20 to 30% by weight of copolymerized C₄-C₁₀ 1-alkenes, a melt flow rate of from 0.2 to 30 g/10 min at 190°C and under a load of 2.16 kg in accordance with ISO 1133, a density of from 0.850 to 0.880 g/cm³ and a Mooney viscosity (MS 1+4; 121°C) of from 5 to 50 in accordance with DIN 53523/T1, and
c) from 5 to 25% by weight of talc whose average particle size by the Sedigraph method is from 1.0 to 10 µm where the propylene polymer (A), the ethylene polymer (B) and the talc (C) are mixed with one another in a mixing apparatus, which comprises mixing the three components (A), (B) and (C) in a twin-screw extruder at from 180 to 280°C in the presence of an organic peroxide.

2. The process according to claim 1, where the other C₂-C₁₀ 1-alkene used in the propylene polymer (A) comprises ethylene.

3. The process according to claim 1 or 2, where the propylene polymer (A) has a melt flow rate of from 30 to 60 g/10 min at 230°C and under a load of 2.16 kg in accordance with ISO 1133 and a content of 5 to 10% by weight of other C₂-C₁₀ 1-alkenes.

4. The process according to any of claims 1 to 3, where the copolymerized C₄-C₁₀ 1-alkene used in the ethylene polymer (B) comprises 1-octene.

5. The process according to any of claims 1 to 4, where the ethylene polymer (B) has from 23 to 26% by weight of copolymerized C₄-C₁₀ 1-alkenes, a melt flow rate of from 0.5 to 5 g/10 min at 190°C and under a load of 2.16 kg in accordance with ISO 1133, a density of from 0.855 to 0.870 g/cm³ and a Mooney viscosity (ML 1+4; 121°C) of from 20 to 40 in accordance with DIN 53523/T1.

6. The process according to any of claims 1 to 5, where the average particle size of the talc (C) by the Sedigraph method is from 1.0 to 4.0 µm.

7. The process according to any of claims 1 to 6, where the polypropylene molding composition has
a) from 40 to 70% by weight of a propylene polymer (A),
b) from 15 to 35% by weight of an ethylene polymer (B), and
c) from 10 to 25% by weight of talc (C).

8. The use of the talc-reinforced polypropylene molding composition obtained according to a process according to any of claims 1 to 7 as a film, fiber or molding.

9. The use of the talc-reinforced polypropylene molding composition obtained according to a process according to any of claims 1 to 7 as a molding in the automotive sector.

## Revendications

1. Procédé pour la préparation d'une masse façonnée de propylènes renforcée au talc contenant
a) 35 à 90% en poids d'un polymère du propylène (A) présentant un indice de fusion de 15 à 100 g/1 0 min, à 230°C et sous un poids de 2,16 kg, selon la norme ISO 1133 et une teneur en autres alc-1-ènes en C₂ à C₁₀ de 0 à 25% en poids,
b) 5 à 40% en poids d'un polymère de l'éthylène (B) comprenant 20 à 30% en poids d'alc-1-ènes en C₄ à C₁₀, sous forme copolymérisée, présentant un indice de fusion de 0,2 à 30 g/10 min, à 190°C et sous un poids de 2,16 kg, selon la norme ISO 1133, une densité de 0,850 à 0,880 g/cm³ et une viscosité de Mooney (MS 1+4; 121°C) selon la norme DIN 53523/partie 1 de 5 à 50 et
c) 5 à 25% en poids de talc présentant une grosseur moyenne des particules de 1,0 à 10 µm selon le procédé au sédigraphe,
le polymère du propylène (A), le polymère de l'éthylène (B) et le talc (C) étant mélangés les uns avec les autres dans un appareil de mélange, **caractérisé en ce que** le mélange des trois composants (A), (B) et (C) est réalisé dans une extrudeuse à double vis sans fin à des températures de 180 jusqu'à 280°C en présence d'un peroxyde organique.

2. Procédé selon la revendication 1, dans lequel on utilise de l'éthylène comme autre alc-1-ène en C₂ à C₁₀ dans le polymère du propylène (A).

3. Procédé selon les revendications 1 ou 2, le polymère du propylène (A) présentant un indice de fusion de 30 à 60 g/10 min, à 230°C et sous un poids de 2,16 kg, selon la norme ISO 1133 et une teneur en autres alc-1-ènes en C₂ à C₁₀ de 5 à 10% en poids.

4. Procédé selon les revendications 1 à 3, **caractérisé en ce qu'**on utilise de l'oct-1-ène comme alc-1-ène en C₄ à C₁₀ copolymérisé dans le polymère de l'éthylène (B).

5. Procédé selon les revendications 1 à 4, le polymère de l'éthylène (B) présentant 23 à 26% en poids d'alc-1-ène en C₄ à C₁₀ copolymérisé, un indice de fusion de 0,5 à 5 g/10 min, à 190°C et sous un poids de 2,16 kg, selon la norme ISO 1133, une densité de 0,855 à 0,870 g/cm³ et une viscosité de Mooney (ML 1+4; 121°C) selon la norme DIN 53523/partie 1 de 20 à 40.

6. Procédé selon les revendications 1 à 5, le talc(C) présentant une grosseur moyenne des particules de 1,0 à 4,0 µm, selon le procédé au sédigraphe.

7. Procédé selon l'une quelconque des revendications 1 à 6, la masse façonnée de polypropylène présentant
a) 40 à 70% en poids d'un polymère du propylène (A),
b) 15 à 35% en poids d'un polymère de l'éthylène (B) et
c) 10 à 25% en poids de talc (C).

8. Utilisation de la masse façonnée de propylène, renforcée au talc, obtenue selon un procédé selon l'une quelconque des revendications 1 à 7 comme feuilles, fibres ou corps façonnés.

9. Utilisation de la masse façonnée de propylène, renforcée au talc, obtenue selon un procédé selon l'une quelconque des revendications 1 à 7 comme corps façonnés dans le domaine des voitures.
